# EUROPEAN PATENT SPECIFICATION

(11) **EP 4 487 738 B1**
(45) Date of publication and mention of the grant of the patent: **03.12.2025**
(21) Application number: 24180295.8
(22) Date of filing: 05.06.2024
(51) Int. Cl.: A47J 31/44, A47J 31/60

(54) **MILK LINE CLEANING SYSTEM FOR COFFEE MAKER**
MILCHLEITUNGSREINIGUNGSSYSTEM FÜR KAFFEEMASCHINE
SYSTÈME DE NETTOYAGE DE LIGNE DE LAIT POUR MACHINE À CAFÉ

(30) Priority: 06.07.2023 CN 202310830301
(43) Date of publication of application: 08.01.2025
(73) Proprietor: Ningbo Kaibo Group Co., Ltd., Zhejiang 315324 (CN)
(72) Inventor: YAN, Jie bo, Ningbo 315324 (CN); LIN, Huo mu, Ningbo 315324 (CN)
(74) Representative: Cabinet Beau de Loménie

(56) References cited:
- EP-A1- 1 561 407
- EP-A1- 2 272 408
- CN-A- 110 693 326
- CN-U- 208 784 473

## Description

### Field of the Invention

The invention relates to the technical field of coffee makers, and particularly relates to a milk line cleaning system for a coffee maker.

### Background of the Invention

To improve the taste of coffee beverages, milk products such as milk foam are often added to the coffee beverages when the coffee beverages are made with a coffee maker, and the milk foam is made by means of a milk frother. After the coffee beverages are made, the milk frother and a milk line thereof need to be detached to be cleaned.

EP 1 561 407 A1 discloses a device for the production of milk foam.

The milk line and milk frother of existing coffee makers are cleaned mainly in the following ways:
1. After milk foam is made one or more times, line parts and the milk frother are detached to be washed with tap water from a faucet; however, because milk will be caked or incrusted in a short time, it will become difficult to clean the milk line and the milk frother later if users fail to clean them instantly every time after milk foam is made. In addition, it is quite likely that the milk line and the milk frother are used again without being cleaned, which only compromises the quality of milk foam beverages, but also leads to health hazards.
2. According to some coffee makers on the market, users take the milk line out of a milk container and then place it a return water box every time after milk foam is made, and then water is output by the coffee maker to wash the milk line and the milk frother. After the milk line and the milk frother are washed, users need to place the milk line back into the milk container to make milk foam again if necessary. By adopting such a method, the milk line and the milk frother cannot be cleaned easily, and the sanitation cannot be guaranteed.
3. According to some other coffee makers, users dump the remaining milk in the milk container after milk foam is made one or more times, then fill the milk container with clean water, and then start the milk frothing function again to pump the clean water from the milk container into the foam frother under the action of a negative pressure in the foam frother. Such a cleaning method is complex and leads to a waste of milk.

### Summary of the Invention

The technical issue and task to be settled by the invention is to overcome the above defects in cleaning of the foam frother of existing coffee makers and the milk line thereof by providing a milk line cleaning system for a coffee maker, which can realize automatic cleaning without any user operation after coffee beverages are made, thus simplifying the cleaning operation and ensuring thorough cleaning.

To fulfill the above purpose, the invention provides according to claim 1 a milk line cleaning system for a coffee maker.

According to the milk line cleaning system, when a coffee beverage is made, the second liquid inlet is connected to the liquid outlet to allow the milk frother to suck milk from the milk container. After the coffee beverage is made, pressure water is delivered to the first liquid inlet connected to the liquid outlet to clean the liquid outlet, the line behind the liquid outlet and the milk frother without detaching the milk frother and the line thereof, so the situation where parts are lost due to washing of the milk frother and the line thereof with tap water from a faucet is avoided. In addition, because pressure water for cleaning has a certain pressure and completely flows through the milk frother and the line thereof, the milk frother and the line thereof can be cleaned thoroughly. Further, the milk line and the milk frother can be cleaned automatically by circuit control every time after milk foam is made, and after cleaning, milk foam can be made again. The milk line cleaning system can operate stably and reliably, and the flow rate of cleaning water can be adjusted as needed.

According to the milk line cleaning system, automatic cleaning can be realized by means of a control system of a coffee maker after a coffee beverage is made, and manual operation is not needed, thus simplifying cleaning operation and saving time.

To realize switching between two fluids (milk and pressure water) by means of one switching valve, the switching valve comprises a valve cavity; the first liquid inlet, the second liquid inlet and the liquid outlet are arranged in the valve cavity, and a valve spool assembly capable of moving between a first position and a second position is arranged in the valve cavity; the valve spool assembly is provided with a valve hole, a valve plug and a first spring, and the first spring applies an elastic force to the valve plug to allow the valve plug to seal the valve hole; when the valve spool assembly is located at the first position under the action of an elastic force from a second spring, the first liquid inlet is disconnected from the liquid outlet, and the second liquid inlet is connected to the liquid outlet to allow liquid from the second liquid inlet to circulate; when pressure water is fed to the first liquid inlet, the pressure water overcomes the elastic force from the second spring to allow the valve spool assembly to move to the second position to seal the second liquid inlet and also overcomes the elastic force from the first spring to push the valve plug away from the valve hole to connect the first liquid inlet to the liquid outlet via the valve hole so as to allow pressure water from the first liquid inlet to circulate.

In this way, in the normal state, the valve spool assembly is located at the first position to disconnect the first liquid inlet from the liquid outlet and connect the second liquid inlet to the liquid outlet, such that milk can circulate towards the liquid outlet via the second liquid inlet. When pressure water is needed, the pressure water is delivered to the first liquid inlet, the valve spool assembly moves to the second position to seal the second liquid inlet under the action of the pressure water, and the pressure water also overcomes the elastic force from the first spring to push the valve plug away from the valve hole to connect the first liquid inlet to the liquid outlet so as to allow pressure water to circulate to the liquid outlet from the first liquid inlet.

Optionally, to simplify the structure and reduce the number of water pumps used for delivering water, the first liquid inlet is connected to an outlet of the first water pump to allow the first water pump to deliver cold pressure water thereto or is connected to an outlet of the heater to allow the first water pump to deliver hot pressure water thereto, and a control valve for turning on and off a water inlet line of the first liquid inlet is arranged on the water inlet line of the first liquid inlet.

Optionally, to satisfy the requirements for pressure water during cleaning such as the requirements for the flow rate and flow velocity of pressure water, a second water pump is connected between the water tank and the first liquid inlet and used for delivering pressure water to the first liquid inlet.

Optionally, to return to the milk suction mode after cleaning, a pressure relief valve is configured for the first liquid inlet. After cleaning, the pressure of the first liquid inlet and the water inlet line thereof is released by means of the pressure relief valve to switch the switching valve to the common state where the second liquid inlet is connected to the liquid outlet, such that the milk frother can suck milk from the milk container.

Optionally, to flexibly configure the structure of the milk line cleaning system, the switching valve is arranged in a milk container. In this case, the second liquid inlet is preferably open at a bottom of the milk container.

Optionally, to flexibly configure the structure of the milk line cleaning system, the switching valve may be located outside the milk container, and the second liquid inlet is connected to a bottom of the milk container.

Optionally, to easily connect the milk container to the coffee maker or detach the milk container from the coffee maker, a line connector for at least one of the first liquid inlet, the second liquid inlet and the liquid outlet is arranged on the milk container. When a coffee beverage is made, the milk container is connected to the coffee maker by means of the line connector; after the coffee beverage is made, the milk container can be detached from the coffee maker to be stored; remaining milk in the milk container, if any, can be stored in a refrigerator; and in case of no remaining milk in the milk container, the milk container can be cleaned.

Optionally, to prevent milk and pressure water from being mixed, the valve spool assembly is configured in the valve cavity like a piston, the valve cavity is partitioned by the valve spool assembly into a first cavity and a second cavity, the first liquid inlet is connected to the first cavity, and when the valve spool assembly is located at the first position, the second liquid inlet and the liquid outlet are connected to the second cavity.

Optionally, to facilitate assembly, the valve cavity is defined by a tubular valve body and a first end cover and a second end cover which are separately connected to two ends of the tubular valve body, a sealing ring is arranged between the valve spool assembly and an inner wall of the tubular valve body to prevent liquid flowing through the sealing ring from circulating in a length direction of the tubular valve body, the first liquid inlet is formed in the first end cover, the second liquid inlet is formed in the second end cover, and the liquid outlet is formed in a side wall of the tubular valve body.

Optionally, to maintain liquid from the first liquid inlet at a suitable pressure, the valve spool assembly comprises a tubular piston seat and a support seat assembled at an end of the tubular piston seat, the second spring acts on the tubular piston seat to push the valve spool assembly to the first position, the valve hole is formed in the tubular piston seat, the first spring has two ends supported on the valve plug and the support seat and applies an elastic force towards the valve hole to the valve plug, and liquid from the first liquid inlet may be maintained at a suitable pressure by means of the first spring.

Optionally, to simplify the circulation path between the first liquid inlet and the liquid outlet, according to one circulation method, a radial hole is formed in the tubular piston seat, a circulation gap is formed outside the tubular piston seat, and when the valve spool assembly moves to the second position, the valve hole is connected to the liquid outlet via the radial hole and the circulation gap; optionally, according to another circulation method, a circulation gap is formed between the support seat and the tubular piston seat, and when the valve spool assembly moves to the second position, the valve hole is connected to the liquid outlet via the circulation gap.

Optionally, to ensure that the valve spool assembly can reliably seals the second liquid inlet when moving to the second position, a sealing block for sealing the second liquid inlet is arranged on the valve plug. Particularly, a circular flange may be arranged at an end, located in the valve cavity, of the second liquid inlet and used for sealing the second liquid inlet when the valve spool assembly moves to the second position.

According to the milk line cleaning system provided by the invention, the switching valve comprising the first liquid inlet, the second liquid inlet and the liquid outlet is configured, the first liquid inlet is used for feeding pressure water, the second liquid inlet is used for sucking milk from the milk container, and the liquid outlet is connected to the milk frother; either the first liquid inlet or the second liquid inlet of the switching valve is configured to be connected to the liquid outlet to allow pressure water or milk to flow out via the liquid outlet; the second liquid inlet is normally connected to the liquid outlet to allow the milk frother to suck milk from the milk container; and when pressure water is delivered to the first liquid inlet, the first liquid inlet is connected to the liquid outlet to clean the liquid outlet, the line behind the liquid outlet, and the milk frother.

According to the milk line cleaning system, when a coffee beverage is made, the second liquid inlet is connected to the liquid outlet to allow the milk frother to suck milk from the milk container. After the coffee beverage is made, pressure water is delivered to the first liquid inlet connected to the liquid outlet to clean the liquid outlet, the line behind the liquid outlet and the milk frother without detaching the milk frother and the line thereof, so the situation where parts are lost due to washing of the milk frother and the line thereof with tap water from a faucet is avoided. In addition, because pressure water for cleaning has a certain pressure and completely flows through the milk frother and the line thereof, the milk frother and the line thereof can be cleaned thoroughly.

Optionally, in the invention, the valve spool assembly capable of moving between a first position and a second position is arranged in the valve cavity; the valve spool assembly is provided with a valve hole, a valve plug and a first spring, and the first spring applies an elastic force to the valve plug to allow the valve plug to seal the valve hole; when the valve spool assembly is located at the first position under the action of an elastic force from a second spring, the first liquid inlet is disconnected from the liquid outlet, and the second liquid inlet is connected to the liquid outlet to allow liquid from the second liquid inlet to circulate; when pressure water is fed to the first liquid inlet, the pressure water overcomes the elastic force from the second spring to allow the valve spool assembly to move to the second position to seal the second liquid inlet and also overcomes the elastic force from the first spring to push the valve plug away from the valve hole to connect the first liquid inlet to the liquid outlet via the valve hole so as to allow pressure water from the first liquid inlet to circulate.

In the normal state, the valve spool assembly is located at the first position to disconnect the first liquid inlet from the liquid outlet and connect the second liquid inlet to the liquid outlet, such that milk can circulate towards the liquid outlet via the second liquid inlet. When pressure water is needed, the pressure water is delivered to the first liquid inlet, the valve spool assembly moves to the second position to seal the second liquid inlet under the action of the pressure water, and the pressure water also overcomes the elastic force from the first spring to push the valve plug away from the valve hole to connect the first liquid inlet to the liquid outlet so as to allow pressure water to circulate to the liquid outlet from the first liquid inlet. In this way, switching between two fluids (milk and pressure water) is realized by means of one switching valve.

### Brief Description of the Drawings

FIG. 1 is a schematic structural diagram of a coffer maker involved in the invention;
FIG. 2 is a schematic diagram of the flow direction of a milk line cleaning system when the coffee maker is used for making milk foam according to Embodiment 1 of the invention;
FIG. 3 is a schematic diagram of the flow direction of the milk line cleaning system when a milk line is cleaned according to Embodiment 1 of the invention;
FIG. 4 is a schematic diagram of the flow direction of the milk line cleaning system when the coffee maker is used for making milk foam according to Embodiment 2 of the invention;
FIG. 5 is a schematic diagram of the flow direction of the milk line cleaning system when the milk line is cleaned according to Embodiment 2 of the invention;
FIG. 6 is a schematic diagram of the flow direction of the milk line cleaning system when the coffee maker is used for making milk foam according to Embodiment 3 of the invention;
FIG. 7 is a schematic diagram of the flow direction of the milk line cleaning system when the milk line is cleaned according to Embodiment 3 of the invention;
FIG. 8 is a sectional structural view of a switching valve in a case where a second liquid inlet is connected to a liquid outlet according to the invention;
FIG. 9 is an exploded structural view of the switching valve in FIG. 8;
FIG. 10 is a sectional structural view of the switching valve shown in FIG. 8 in a case where a first liquid inlet is connected to the liquid outlet according to the invention;

Reference Signs:
100, switching valve;
110, valve cavity; 111, tubular valve body; 112, first end cover; 113, second end cover; 114, first liquid inlet; 115, second liquid inlet; 116, liquid outlet; 117, circular flange; 118, first cavity; 119, second cavity;
120, valve spool assembly; 121, tubular piston seat; 122, support seat; 123, valve hole; 124, first spring; 125, valve plug; 126, sealing block; 127, circular groove; 128, sealing ring; 129, radial hole;
130, circulation gap;
140, second spring;
200, coffee maker; 201, water tank; 202, first water pump; 203, heater; 204, coffee brewing assembly; 205, milk frother; 206, milk container; 207, second water pump; 208, control valve; 209, pressure relief valve; 210, globe valve; 211, return water box; 212, line connector; 213, safety valve; 214, check valve; 215, coffee outlet; 216, flowmeter;
300, coffee cup.

### Detailed Description of the Invention

To gain a better understanding of the purposes, technical solutions and advantages of the invention, the technical solutions of the embodiments of the invention will be clearly and completely described below in conjunction with accompanying drawings of these embodiments. Obviously, the embodiments in the following description are merely illustrative ones, and are not all possible ones of the invention. All other embodiments obtained by those ordinarily skilled in the art based on the following ones without creative labor should also fall within the protection scope of the invention.

Terms "comprise" and "provided with" and any variants thereof in the description and claims of the invention are intended to indicate non-exclusive inclusion. For example, a method or product comprising a series of technical features is not definitely limited to the technical features that are clearly listed, and may also comprise other technical features that are not limited clearly and may be included in the method or product.

In the description of the invention, it should be understood that terms with a concept of sequence such as "first" and "second" are merely used for clearly describing a technical feature defined to clearly distinguish the technical feature defined from other technical features, do not indicate that the technical feature defined should be named in this way actually, and thus should be construed as limitations of the invention.

The invention is introduced in detail below in conjunction with specific embodiments and accompanying drawings.

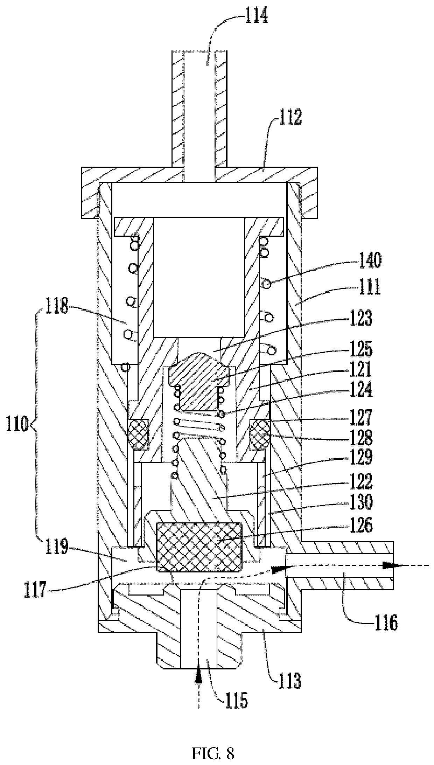

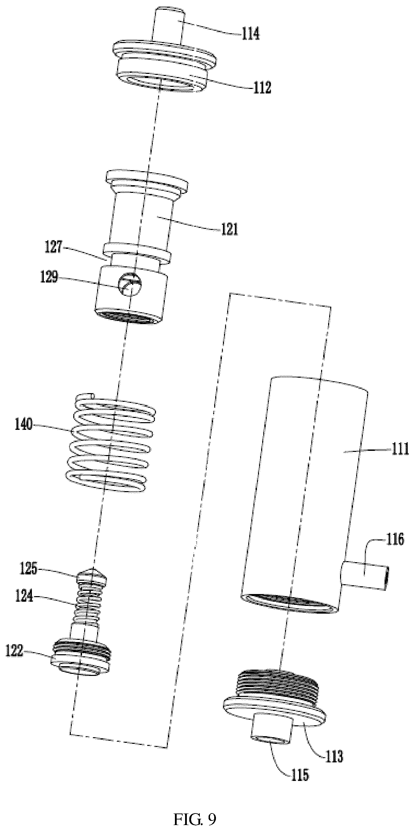

FIGS. 8-10 illustrate a switching valve used for a milk line cleaning system. The switching valve comprises a valve cavity 110 and a valve spool assembly 120 configured in the valve cavity.

The valve cavity 110 is defined by a tubular valve body 111 and a first end cover 112 and a second end cover 113 which are separately connected to two ends of the tubular valve body, and the first end cover 112 and the second end cover 113 are preferably connected to the two ends of the tubular valve body threadedly. The valve cavity 110 is provided with a first liquid inlet 114, a second liquid inlet 115 and a liquid outlet 116. The first liquid inlet 114 is formed in the first end cover 112. The second liquid inlet 115 is formed in the second end cover 113. A circular flange 117 for sealing the second liquid inlet when the valve spool assembly moves to a second position is arranged at an end, located in the valve cavity, of the second liquid inlet 115. The liquid outlet 116 is formed in a position, close to the second end cover, of a lower end of a side wall of the tubular valve body 111.

The valve spool assembly 120 is configured in the valve body 110 like a piston and is able to move between a first position and a second position. The valve spool assembly 120 comprises a tubular piston seat 121, a support seat 122, a valve hole 123, a first spring 124, a valve plug 125 and a sealing block 126. The valve hole 123 is formed in the center of the interior of the piston seat 121 and is open towards the first cavity 118. The support seat 122 is threadedly assembled at a lower end of the tubular piston seat 121. The first spring 124 and the valve plug 125 are located between a lower side of the valve hole 123 and the support seat 122, and two ends of the first spring 124 are supported on the valve plug 125 and the support seat 122 to apply an elastic force towards the valve hole to the valve plug, and in case of no pressure water in the first liquid inlet, the valve plug 125 seals the valve hole 123 under the action of the elastic force 124 from the first spring 124. The sealing block 126 is inlaid in a lower end of the support seat 122, corresponds to the second liquid inlet 115 and is used for sealing the second liquid inlet when the valve spool assembly is located at the second position. A circular groove 127 is formed in an outer wall of the tubular piston seat 121, a sealing ring 128 is arranged in the circular groove 127, and the sealing ring 128 is pressed in an inner wall of the tubular valve body 111 and the circular groove 127 to prevent liquid flowing through the sealing ring from circulating in the length direction of the valve body. In addition, when located at the first position shown in FIG. 8, the valve cavity 110 is partitioned by the valve spool assembly 120 into a first cavity 118 and a second cavity 119, and the first liquid inlet 114 is connected to the first cavity 118; and when the valve spool assembly 120 is located at the second position, the second liquid inlet 115 and the liquid outlet 116 are connected to the second cavity 119. In addition, an outer diameter of the tubular piston seat 121 is less than an inner diameter of the tubular valve body 111, and a circulation gap 130 is reserved between the tubular piston seat 121 and the inner wall of the tubular valve body 111.

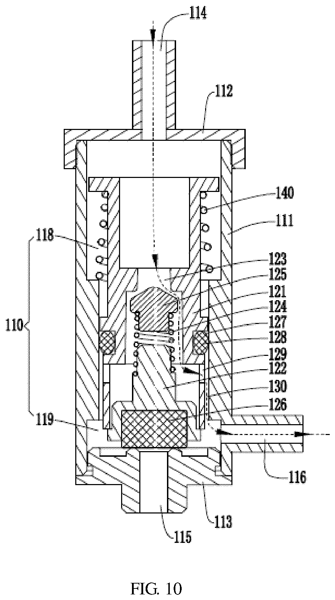

A radial hole 129 is formed in the tubular piston seat 121. When the valve spool assembly 120 moves to the second position shown in FIG. 10, the valve hole 123 is connected to the liquid outlet 116 via the radial hole 129 and the circulation gap 130. In other embodiments, a circulation gap is formed between the support seat 122 and the tubular piston seat 121, and when the valve spool assembly moves to the second position, the valve hole is connected to the liquid outlet via the circulation gap.

A second spring 140 is disposed around the tubular piston seat 121 and has two ends supported on the tubular piston seat 121 and the tubular valve body 111 respectively, and the second spring 140 applies an upward elastic force to the tubular piston seat 121 to push the valve spool assembly 120 to be located at the first position shown in FIG. 8 in case of no pressure water in the first cavity.

In this way, the valve spool assembly 120 is located at the first position shown in FIG. 8 in a normal state, and at this moment, the first liquid inlet 114 is disconnected from the liquid outlet 116, and the second liquid inlet 115 is connected to the liquid outlet 116 to allow milk from the second liquid inlet to circulate. When pressure water is fed to the first liquid inlet in the state shown in FIG. 8, the pressure water overcomes the elastic force from the second spring 140 to allow the valve spool assembly 120 to move to the second position shown in FIG. 10 to block the second liquid inlet 115 and also overcomes the elastic force from the first spring 124 to push the valve plug 125 away from the valve hole 123 to connect the first liquid inlet 114 to the liquid outlet 116 via the valve hole 123, the radial hole 129 and the circulation gap 130 so as to allow the pressure water from the first liquid inlet to circulate. The flow direction of liquid is indicated by the dotted line with an arrow in FIGS. 8 and 10.

The switching valve can be applied to a milk line cleaning system for a coffee maker to realize switching between milk delivery and pressure water delivery.

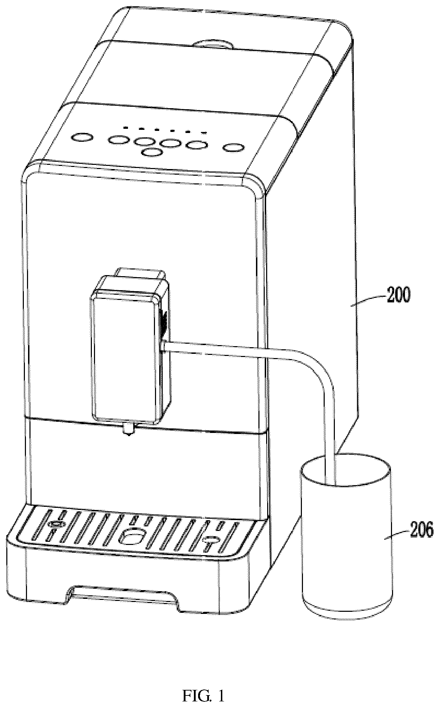

A milk container is generally arranged at a position where the milk container can be easily connected to and detached from a coffee maker, as shown in FIG. 1.

### Embodiment 1

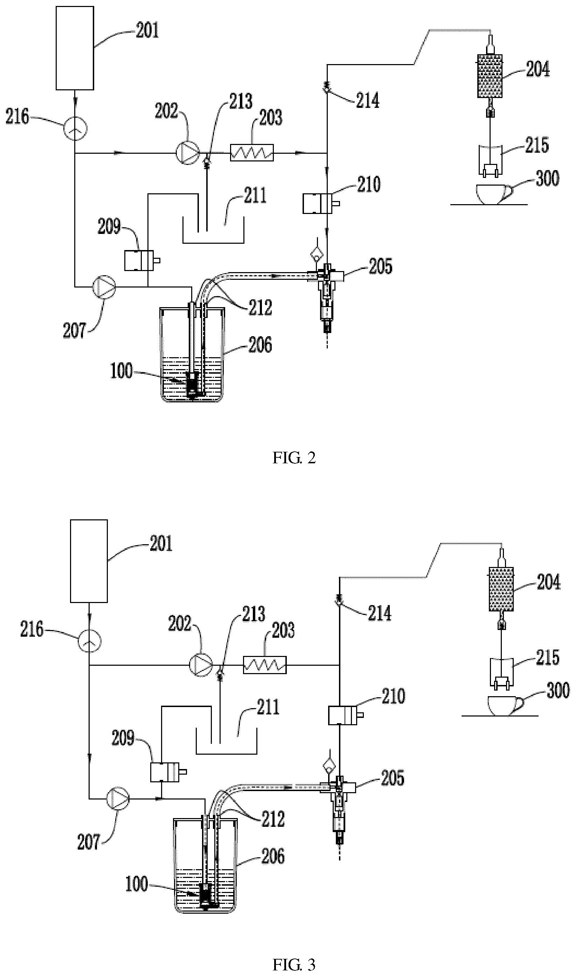

As shown in FIGS.2-3 which illustrate the schematic diagrams of components of a water line and a milk line of a coffee maker in this embodiment, in which a milk line cleaning system is included. Wherein, the milk line cleaning system comprises a water tank 201, a first water pump 202, a second water pump 207, a heater 203, a milk frother 205 and a milk container 206. Water is delivered by the first water pump 202 from the water tank 201 into the heater 203 and is atomized by the heater into steam, which is then delivered into the milk frother 205, and the milk container 206 is connected to the milk frother 205, such that the milk frother 205 is allowed to suck milk from the milk container 206 and then froth the milk. The second water pump 207 is connected between the water tank 201 and the first liquid inlet 114 and used for delivering pressure water to the first liquid inlet 114, that is, water in the water tank is pressurized by the water pump to be under a high pressure. A pressure relief valve 209 is configured for the first liquid inlet 114, and the pressure relief valve 209 is a two-position two-way solenoid valve with one position in an off state and the other position in an on state. The switching valve 100 is arranged in the milk container 206, and the second liquid inlet 114 is open at the bottom of the milk tank 206. Line connectors 212 for the first liquid inlet and the liquid outlet are arranged on the milk container 206.

In FIGS. 2-3, a safety valve 213 is connected to an outlet line of the first water pump 202. An outlet of the heater 203 is connected to a coffee brewing assembly 204 by means of a line on which a check valve 214 is configured. A globe valve 210 is configured on a line between the outlet of the heater 203 and the milk frother 205, and the globe valve 210 is a two-position two-way solenoid valve with one position in an off state and the other position in an on state.

As shown in FIGS. 2-3, the first liquid inlet 114 of the switching valve 100 is used for feeding pressure water, the second liquid inlet 115 of the switching valve is used for sucking milk from the milk container, and the liquid outlet 116 is connected to the milk frother. In addition, either the first liquid inlet 114 or the second liquid inlet 115 of the switching valve 100 is connected to the liquid outlet 116 to allow pressure water or milk to flow out via the liquid outlet; the second liquid inlet 114 is normally connected to the liquid outlet 116 to allow the milk frother to suck milk from the milk container; and when pressure water is delivered to the first liquid inlet 114, the first liquid inlet 114 is connected to the liquid outlet 116 to clean the liquid outlet 116, a line behind the liquid outlet 116, and the milk frother.

As shown in FIGS. 2-3, when coffee is made, the globe valve 210 is turned off, water is delivered by the first water pump 202 from the water tank 201 into the coffee brewing assembly 204 and is heated into hot water when flowing through the heater 203, and the hot water flows through the coffee brewing assembly at a certain temperature and pressure to absorb flavors from ground coffee in the coffee brewing assembly to obtain a coffee beverage, which then flows from the coffee brewing assembly into a coffee cup 300 via a coffee outlet 215. A flowmeter is 216 is used for measuring the flow rate, and when the quantity of water delivered by the first water pump 202 reaches a set value, the first water pump and the heater stop operating.

When milk foam needs to be added to the coffee beverage, the switching valve 100 is in the state shown in FIG. 8, at this moment, as shown in FIG. 2, the globe valve 210 is turned on, the first water pump 202 and the heater 203 are started, water is atomized into steam by the heater, the steam flows to the milk frother 205 through the stop valve 210 and flows in the milk frother at a high speed to form a negative pressure, milk is sucked from the milk container 206 into the milk frother 205 via the second liquid inlet 115 and the liquid outlet 116 connected with the second liquid inlet 115, and the milk is frothed in the milk frother to form milk foam, which then flows out or the milk frother to be added into the coffee beverage. The milk foam from the milk frother can flow into the coffee cup directly or be added into the coffee cup by means of a tool. The flow direction of the milk is indicated by the dotted line with an arrow in FIG. 2.

After the milk foam is made, the milk line is cleaned: as shown in FIG. 3, the first water pump 202 and the heater 203 stop operating, the globe valve 210 is turned off, the pressure relief valve 209 is turned off, the second water pump 207 is started, water is delivered by the second water pump 207 from the water tank 2021 to the first liquid inlet 114, the switching valve 100 is switched to the state shown in FIG. 10, and at this moment, the water flows through the switching valve 100, the milk line and the milk frother 205 and finally is discharged from the milk frother, such that the milk frother and the milk line are washed. In the washing process, the washing time or the flow rate can be set for control; and washing is stopped when it reaches the set washing time or flow rate. The flow direction of pressure water is indicated by the dotted line with an arrow in FIG. 3.

After washing, the pressure relief valve 209 is turned on, and water flows from the first cavity 118 into a return water box 211 through the pressure relief valve 209 under the action of the second spring 140, and the switching valve 100 returns to the state shown in FIG. 8.

### Embodiment 2

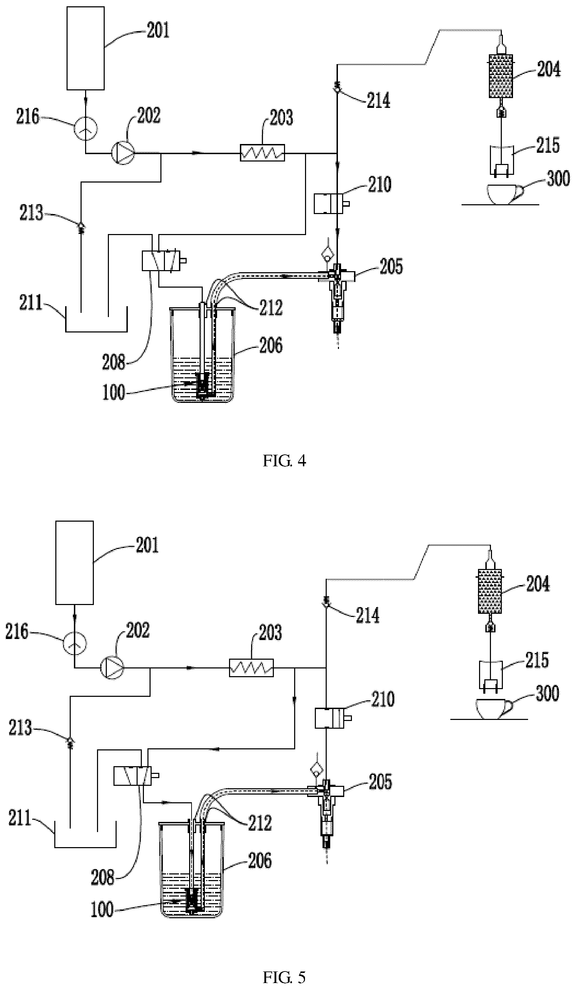

As shown in FIGS. 4-5, this embodiment is different from Embodiment 1 merely in that only the first water pump 202 is arranged and the second water pump is omitted. In this embodiment, the first liquid inlet 114 is connected to the outlet of the heater 203 to allow hot pressure water to be delivered therein by the first water pump, and a control valve 208 for turning on and off a water inlet line of the first liquid inlet 114 is arranged on the water inlet line. The control valve is a three-position three-way solenoid valve and can also function as a pressure relief valve. One position of the two-position and three-way solenoid valve is used for releasing pressure, that is, one position of the two-position and three-way solenoid valve is used for connecting the first cavity and the return water box, and in this case, a line between the first liquid inlet 114 and the heater 203 is turned off. The other position of the two-position three-way solenoid valve is used for connecting the first cavity and the outlet of the heater 203, and in this case, the pressure relief function is disabled. The other structures of this embodiment are the same as those of Embodiment 1 and will not be repeated here.

As shown in FIGS. 4-5, when coffee is made, the globe valve 210 is turned off, the control valve 208 is turned off (the pressure relief function is enabled), water is delivered by the first water pump 202 from the water tank 201 into the coffee brewing assembly 204 and is heated into hot water when flowing through the heater 203, and the hot water flows through the coffee brewing assembly at a certain temperature and pressure to absorb flavors from ground coffee in the coffee brewing assembly 204 to obtain a coffee beverage, which then flows from the coffee brewing assembly into the coffee cup 300 via the coffee outlet 215. A flowmeter is 216 is used for measuring the flow rate, and when the quantity of water delivered by the first water pump reaches a set value, the first water pump and the heater stop operating.

When milk foam needs to be added to the coffee beverage, the switching valve 100 is in the state shown in FIG. 8, at this moment, as shown in FIG. 4, the globe valve 210 is turned on, the first water pump 202 and the heater 203 are started, water is atomized into steam by the heater, the steam flows to the milk frother 205 through the globe valve 210 and flows in the milk frother at a high speed to form a negative pressure, milk is sucked from the milk container into the milk frother 205 via the first liquid inlet 114 and the liquid outlet 116 connected with the first liquid inlet 114, and the milk is frothed in the milk frother to form milk foam, which then flows out of the milk frother to be added into the coffee beverage. The milk foam from the milk frother can flow into the coffee cup directly or be added into the coffee cup by means of a tool. The flow direction of the milk is indicated by the dotted line with an arrow in FIG. 4.

After the milk foam is made, the milk line is cleaned: as shown in FIG. 5, the globe valve 210 is turned off, the control valve is turned on (the pressure relief function is disabled), the first water pump 202 and the heater 203 operate, water is delivered by the first water pump 202 from the water tank 201 to the first liquid inlet 114 through the control valve 208, the switching valve 100 is switched to the state shown in FIG. 10, and at this moment, the water is heated and flows through the switching valve 100, the milk line and the milk frother 205, and finally is discharged from the milk frother, such that the milk frother and the milk line are washed. In the washing process, the washing time or flow rate can be set for control; and washing is stopped when it reaches the set washing time or flow rate. The flow direction of pressure water is indicated by the dotted line with an arrow in FIG. 5.

After washing, the pressure relief function is enabled, and water flows from the first cavity 118 into the return water box 211 through the control valve 208 under the action of the second spring 140, and the switching valve 100 returns to the state shown in FIG. 8.

In this embodiment, the milk line is washed with hot water, so a better cleaning effect is realized.

Based on this embodiment, the first liquid inlet 114 may be connected to an outlet of the first water pump in front of the heater, and cold pressure water may be delivered by the first water pump to the first liquid inlet 114.

### Embodiment 3

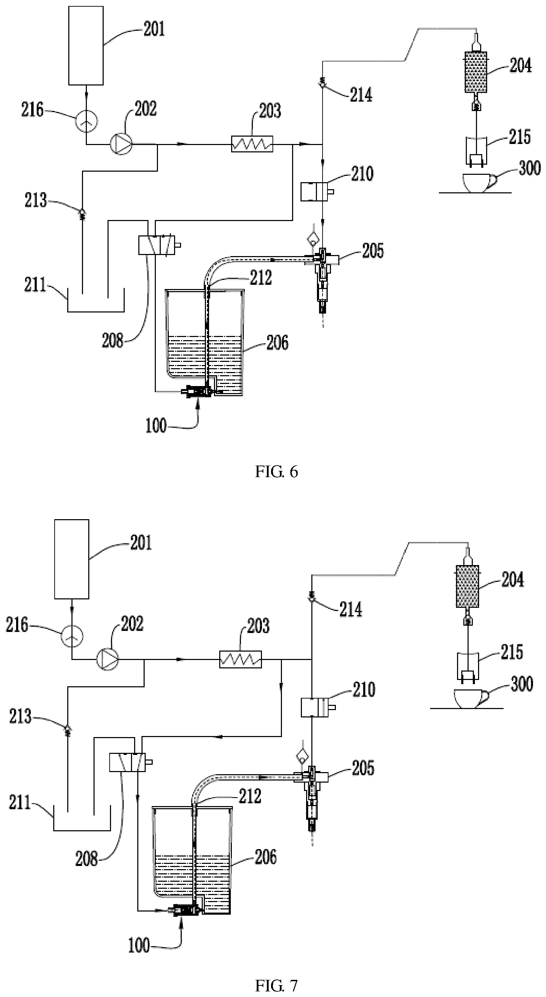

As shown in FIGS. 6-7, this embodiment is different from Embodiment 2 merely in that the switching valve 100 is located outside the milk container 206, and the second liquid inlet 114 is connected to the bottom of the milk container 206 to allow the milk frother 205 to suck milk from the milk container 206. The other structures of this embodiment are the same as those of Embodiment 1 and will not be repeated here. The coffee making process, milk foam making process and cleaning process in this embodiment are the same as those in Embodiment 2 and will not be repeated here.

In the above embodiments, a line connector for at least one of the first liquid inlet 114, the second liquid inlet 115 and the liquid outlet 116 is arranged on the milk container and is used for connecting the milk container to the coffee maker or disconnecting the milk container from the coffee maker.

Wherein, the first water pump and the second water pump are preferably plunger pumps. When the plunger pump works, liquid is delivered; and when the plunger pump stops working, the line where the plunger pump is located can be turned off to prevent liquid from flowing in the line.

## Claims

1. A milk line cleaning system for a coffee maker, comprising a water tank (201), a first water pump (202), a heater (203), a milk frother (205) and a milk container (206), water being delivered from the water tank into the heater by the first water pump and being atomized by the heater into steam, which is then delivered into the milk frother, and the milk container being connected to the milk frother to allow the milk frother to suck milk therefrom and froth the milk, wherein a switching valve (100) comprising a first liquid inlet (114), a second liquid inlet (115) and a liquid outlet (116) is configured, the first liquid inlet (114) is used for feeding pressure water, the second liquid inlet (115) is used for sucking milk from the milk container, and the liquid outlet (116) is connected to the milk frother; either the first liquid inlet (114) or the second liquid inlet (115) of the switching valve is configured to be connected to the liquid outlet (116) to allow pressure water or milk to flow out via the liquid outlet; the second liquid inlet (115) is normally connected to the liquid outlet (116) to allow the milk frother to suck milk from the milk container; and when pressure water is delivered to the first liquid inlet (114), the first liquid inlet (114) is connected to the liquid outlet (116) to clean the liquid outlet (116), a line behind the liquid outlet (116), and the milk frother,
the milk line cleaning system for a coffee maker being **characterized in that**:
the switching valve comprises a valve cavity (110); the first liquid inlet (114), the second liquid inlet (115) and the liquid outlet (116) are arranged in the valve cavity, and a valve spool assembly (120) capable of moving between a first position and a second position is arranged in the valve cavity (110); the valve spool assembly (120) is provided with a valve hole (123), a valve plug (125) and a first spring (124), and the first spring (124) applies an elastic force to the valve plug (125) to allow the valve plug (125) to seal the valve hole (123); when the valve spool assembly (120) is located at the first position under the action of an elastic force from a second spring (140), the first liquid inlet (114) is disconnected from the liquid outlet (116), and the second liquid inlet (115) is connected to the liquid outlet (116) to allow liquid from the second liquid inlet (115) to circulate; when pressure water is fed to the first liquid inlet (114), the pressure water overcomes the elastic force from the second spring (140) to allow the valve spool assembly (120) to move to the second position to seal the second liquid inlet (115) and also overcomes the elastic force from the first spring (124) to push the valve plug (125) away from the valve hole (123) to connect the first liquid inlet (114) to the liquid outlet (116) via the valve hole (123) so as to allow pressure water from the first liquid inlet to circulate.

2. The milk line cleaning system for a coffee maker according to Claim 1, wherein the first liquid inlet (114) is connected to an outlet of the first water pump (202) to allow the first water pump to deliver cold pressure water thereto or is connected to an outlet of the heater (203) to allow the first water pump to deliver hot pressure water thereto, and a control valve (208) for turning on and off a water inlet line of the first liquid inlet (114) is arranged on the water inlet line of the first liquid inlet (114).

3. The milk line cleaning system for a coffee maker according to Claim 1 or 2, wherein a second water pump (207) is connected between the water tank (201) and the first liquid inlet (114) and used for delivering pressure water to the first liquid inlet (114).

4. The milk line cleaning system for a coffee maker according to any of Claims 1 to 3, wherein a pressure relief valve (209) is configured for the first liquid inlet (114).

5. The milk line cleaning system for a coffee maker according to any of Claims 1 to 4, wherein the switching valve (100) is arranged in the milk container (206), the second liquid inlet (114) being optionally open at a bottom of the milk container (206).

6. The milk line cleaning system for a coffee maker according to any of Claims 1 to 4, wherein the switching valve (100) is located outside the milk container (206), and the second liquid inlet (114) is connected to a bottom of the milk container (206).

7. The milk line cleaning system for a coffee maker according to any of Claims 1 to 6, wherein a line connector (212) for at least one of the first liquid inlet (114), the second liquid inlet (115) and the liquid outlet (116) is arranged on the milk container (206).

8. The milk line cleaning system for a coffee maker according to any one of Claims 1 to 7, wherein the valve spool assembly (120) is configured in the valve cavity (110) like a piston, the valve cavity (110) is partitioned by the valve spool assembly (120) into a first cavity (118) and a second cavity (119), the first liquid inlet (114) is connected to the first cavity (118), and when the valve spool assembly is located at the first position, the second liquid inlet (115) and the liquid outlet (116) are connected to the second cavity (119).

9. The milk line cleaning system for a coffee maker according to any one of Claims 1 to 8, wherein the valve cavity (110) is defined by a tubular valve body (111) and a first end cover (112) and a second end cover (113) which are separately connected to two ends of the tubular valve body, a sealing ring (128) is arranged between the valve spool assembly (120) and an inner wall of the tubular valve body (111) to prevent liquid flowing through the sealing ring from circulating in a length direction of the tubular valve body, the first liquid inlet (114) is formed in the first end cover (112), the second liquid inlet (115) is formed in the second end cover (113), and the liquid outlet (116) is formed in a side wall of the tubular valve body (111).

10. The milk line cleaning system for a coffee maker according to any of Claims 1 to 9, wherein the valve spool assembly (120) comprises a tubular piston seat (121) and a support seat (122) assembled at an end of the tubular piston seat, the second spring (140) acts on the tubular piston seat (121) to push the valve spool assembly (120) to move to the first position, the valve hole (123) is formed in the tubular piston seat (121), and the first spring (124) has two ends supported on the valve plug (125) and the support seat (122) and applies an elastic force towards the valve hole (123) to the valve plug.

11. The milk line cleaning system for a coffee maker according to Claim 10, wherein a radial hole (129) is formed in the tubular piston seat (121), a circulation gap (130) is formed outside the tubular piston seat (121), and when the valve spool assembly (120) moves to the second position, the valve hole (123) is connected to the liquid outlet (116) via the radial hole (129) and the circulation gap (130).

12. The milk line cleaning system for a coffee maker according to Claim 10 or 11, wherein a circulation gap is formed between the support seat (122) and the tubular piston seat (121), and when the valve spool assembly (120) moves to the second position, the valve hole (123) is connected to the liquid outlet (116) via the circulation gap.

13. The milk line cleaning system for a coffee maker according to any of Claims 1 to 12, wherein a sealing block (126) for sealing the second liquid inlet (115) is arranged on the valve plug (125).

14. The milk line cleaning system for a coffee maker according to Claim 7 or 13, wherein a circular flange (117) is arranged at an end, located in the valve cavity, of the second liquid inlet (115) and used for sealing the second liquid inlet when the valve spool assembly moves to the second position.

## Patentansprüche

1. Milchleitungsreinigungssystem für Kaffeemaschine, umfassend einen Wassertank (201), eine erste Wasserpumpe (202), einen Erhitzer (203), einen Milchaufschäumer (205) und einen Milchbehälter (206), wobei Wasser durch die erste Wasserpumpe aus dem Wassertank in den Erhitzer zugeführt und durch den Erhitzer zu Dampf zerstäubt wird, der dann in den Milchaufschäumer zugeführt wird, und wobei der Milchbehälter mit dem Milchaufschäumer verbunden ist, um zu ermöglichen, dass der Milchaufschäumer Milch daraus ansaugt und aufschäumt, wobei ein Umschaltventil (100), umfassend einen ersten Flüssigkeitseinlass (114), einen zweiten Flüssigkeitseinlass (115) und einen Flüssigkeitsauslass (116), konfiguriert ist, der erste Flüssigkeitseinlass (114) zum Zuführen von Druckwasser verwendet wird, der zweite Flüssigkeitseinlass (115) zum Ansaugen von Milch aus dem Milchbehälter verwendet wird, und der Flüssigkeitsauslass (116) mit dem Milchaufschäumer verbunden ist; entweder der erste Flüssigkeitseinlass (114) oder der zweite Flüssigkeitseinlass (115) des Umschaltventils konfiguriert ist, um mit dem Flüssigkeitsauslass (116) verbunden zu sein, um zu ermöglichen, dass Druckwasser oder Milch über den Flüssigkeitsauslass abfließt; der zweite Flüssigkeitseinlass (115) normalerweise mit dem Flüssigkeitsauslass (116) verbunden ist, um zu ermöglichen, dass der Milchaufschäumer Milch aus dem Milchbehälter ansaugt; und wenn dem ersten Flüssigkeitseinlass (114) Druckwasser zugeführt wird, der erste Flüssigkeitseinlass (114) mit dem Flüssigkeitsauslass (116) verbunden ist, um den Flüssigkeitsauslass (116), eine Leitung hinter dem Flüssigkeitsauslass (116) und den Milchaufschäumer zu reinigen,
wobei das Milchleitungsreinigungssystem für eine Kaffeemaschine, **dadurch gekennzeichnet, dass**:
das Umschaltventil einen Ventilhohlraum (110) umfasst; der erste Flüssigkeitseinlass (114), der zweite Flüssigkeitseinlass (115) und der Flüssigkeitsauslass (116) in dem Ventilhohlraum angeordnet sind, und eine Ventilschieberanordnung (120), die in der Lage ist, sich zwischen einer ersten Position und einer zweiten Position zu bewegen, in dem Ventilhohlraum (110) angeordnet ist; die Ventilschieberanordnung (120) mit einem Ventilloch (123), einem Ventilkegel (125) und einer ersten Feder (124) versehen ist, und die erste Feder (124) eine elastische Kraft auf den Ventilkegel (125) ausübt, um zu ermöglichen, dass Ventilkegel (125) das Ventilloch (123) abdichtet; wenn sich die Ventilschieberanordnung (120) unter der Wirkung einer elastischen Kraft einer zweiten Feder (140) in der ersten Position befindet, der erste Flüssigkeitseinlass (114) von dem Flüssigkeitsauslass (116) getrennt ist, und der zweite Flüssigkeitseinlass (115) dem Flüssigkeitsauslass (116) verbunden ist, damit Flüssigkeit aus dem zweiten Flüssigkeitseinlass (115) zirkulieren kann; wenn dem ersten Flüssigkeitseinlass (114) Druckwasser zugeführt wird, das Druckwasser die elastische Kraft der zweiten Feder (140) überwindet, um es der Ventilschieberanordnung (120) zu ermöglichen, sich in die zweite Position zu bewegen, um den zweiten Flüssigkeitseinlass (115) abzudichten, und auch die elastische Kraft der ersten Feder (124) überwindet, um den Ventilstopfen (125) von der Ventilöffnung (123) wegzudrücken, um den ersten Flüssigkeitseinlass (114) über die Ventilöffnung (123) mit dem Flüssigkeitsauslass (116) zu verbinden, damit das Druckwasser von dem ersten Flüssigkeitseinlass zirkulieren kann.

2. Milchleitungsreinigungssystem für eine Kaffeemaschine nach Anspruch 1, wobei der erste Flüssigkeitseinlass (114) mit einem Auslass der ersten Wasserpumpe (202) verbunden ist, um der ersten Wasserpumpe zu ermöglichen, kaltes Druckwasser zuzuführen, oder mit einem Auslass des Heizgeräts (203) verbunden ist, um der ersten Wasserpumpe zu ermöglichen, dort heißes Druckwasser zuzuführen, und ein Steuerventil (208) zum Ein- und Ausschalten einer Wassereinlassleitung des ersten Flüssigkeitseinlasses (114) an der Wassereinlassleitung des ersten Flüssigkeitseinlasses (114) angeordnet ist.

3. Milchleitungsreinigungssystem für eine Kaffeemaschine nach Anspruch 1 oder 2, wobei zwischen dem Wassertank (201) und dem ersten Flüssigkeitseinlass (114) eine zweite Wasserpumpe (207) verbunden ist und verwendet wird, um dem ersten Flüssigkeitseinlass (114) Druckwasser zuzuführen.

4. Milchleitungsreinigungssystem für eine Kaffeemaschine nach einem der Ansprüche 1 bis 3, wobei ein Druckbegrenzungsventil (209) für den ersten Flüssigkeitseinlass (114) konfiguriert ist.

5. Milchleitungsreinigungssystem für eine Kaffeemaschine nach einem der Ansprüche 1 bis 4, wobei das Umschaltventil (100) in dem Milchbehälter (206) angeordnet ist, der zweite Flüssigkeitseinlass (114) optional an einem Boden des Milchbehälters (206) offen ist.

6. Milchleitungsreinigungssystem für eine Kaffeemaschine nach einem der Ansprüche 1 bis 4, wobei sich das Umschaltventil (100) außerhalb des Milchbehälters (206) befindet, und der zweite Flüssigkeitseinlass (114) mit einem Boden des Milchbehälters (206) verbunden ist.

7. Milchleitungsreinigungssystem für eine Kaffeemaschine nach einem der Ansprüche 1 bis 6, wobei ein Leitungsverbinder (212) für mindestens einen von dem ersten Flüssigkeitseinlässe (114), dem zweiten Flüssigkeitseinlass (115) und dem Flüssigkeitsauslass (116) an dem Milchbehälter (206) angeordnet ist.

8. Milchleitungsreinigungssystem für eine Kaffeemaschine nach einem der Ansprüche 1 bis 7, wobei die Ventilschieberanordnung (120) in dem Ventilhohlraum (110) wie ein Kolben konfiguriert ist, der Ventilhohlraum (110) durch die Ventilschieberanordnung (120) in einen ersten Hohlraum (118) und einen zweiten Hohlraum (119) unterteilt ist, der erste Flüssigkeitseinlass (114) mit dem ersten Hohlraum (118) verbunden ist, und wenn sich die Ventilschieberanordnung in der ersten Position befindet, der zweite Flüssigkeitseinlass (115) und der Flüssigkeitsauslass (116) mit dem zweiten Hohlraum (119) verbunden sind.

9. Milchleitungsreinigungssystem für eine Kaffeemaschine nach einem der Ansprüche 1 bis 8, wobei der Ventilhohlraum (110) durch einen rohrförmigen Ventilkörper (111) und eine erste Endabdeckung (112) und eine zweite Endabdeckung (113), die separat mit zwei Enden des rohrförmigen Ventilkörpers verbunden sind, definiert ist, ein Dichtungsring (128) zwischen der Ventilschieberanordnung (120) und einer Innenwand des rohrförmigen Ventilkörpers (111) angeordnet ist, um zu verhindern, dass Flüssigkeit, die durch den Dichtungsring fließt, in einer Längsrichtung des rohrförmigen Ventilkörpers zirkuliert, der erste Flüssigkeitseinlass (114) in der ersten Endabdeckung (112) gebildet ist, der zweite Flüssigkeitseinlass (115) in der zweiten Endabdeckung (113) gebildet, und der Flüssigkeitsauslass (116) in einer Seitenwand des rohrförmigen Ventilkörpers (111) gebildet ist.

10. Milchleitungsreinigungssystem für eine Kaffeemaschine nach einem der Ansprüche 1 bis 9, wobei die Ventilschieberanordnung (120) einen rohrförmigen Kolbensitz (121) und einen an einem Ende des rohrförmigen Kolbensitzes montierten Trägersitz (122) umfasst, die zweite Feder (140) auf den rohrförmigen Kolbensitz (121) wirkt, um die Ventilschieberanordnung (120) in die erste Position zu bewegen, das Ventilloch (123) in dem rohrförmigen Kolbensitz (121) gebildet ist, und die erste Feder (124) zwei Enden aufweist, die auf dem Ventilkegel (125) und dem Trägersitz (122) getragen werden und eine elastische Kraft in Richtung der Ventilöffnung (123) auf den Ventilkegel ausübt.

11. Milchleitungsreinigungssystem für eine Kaffeemaschine nach Anspruch 10, wobei in dem rohrförmigen Kolbensitz (121) ein radiales Loch (129) gebildet ist, ein Zirkulationsspalt (130) außerhalb des rohrförmigen Kolbensitzes (121) gebildet ist, und wenn sich die Ventilschieberanordnung (120) in die zweite Position bewegt, die Ventilöffnung (123) über die radiale Öffnung (129) und den Zirkulationsspalt (130) mit dem Flüssigkeitsauslass (116) verbunden ist.

12. Milchleitungsreinigungssystem für eine Kaffeemaschine nach Anspruch 10 oder 11, wobei ein Zirkulationsspalt zwischen dem Trägersitz (122) und dem rohrförmigen Kolbensitz (121) gebildet ist, und wenn die Ventilschieberanordnung (120) sich in die zweite Position bewegt, die Ventilöffnung (123) über den Zirkulationsspalt mit dem Flüssigkeitsauslass (116) verbunden ist.

13. Milchleitungsreinigungssystem für eine Kaffeemaschine nach einem der Ansprüche 1 bis 12, wobei auf dem Ventilkegel (125) ein Dichtungsblock (126) zum Abdichten des zweiten Flüssigkeitseinlasses (115) angeordnet ist.

14. Milchleitungsreinigungssystem für eine Kaffeemaschine nach Anspruch 7 oder 13, wobei ein kreisförmiger Flansch (117) an einem Ende, das sich in dem Ventilhohlraum befindet, des zweiten Flüssigkeitseinlasses (115) angeordnet ist und zum Abdichten des zweiten Flüssigkeitseinlasses verwendet wird, wenn sich die Ventilschieberanordnung in die zweite Position bewegt.

## Revendications

1. Système de nettoyage de ligne de lait pour une machine à café, comprenant un réservoir d'eau (201), une première pompe à eau (202), un dispositif de chauffage (203), un mousseur à lait (205) et un récipient de lait (206), l'eau étant distribuée du réservoir d'eau dans le dispositif de chauffage par la première pompe à eau et étant atomisée par le dispositif de chauffage en vapeur, qui est ensuite distribuée dans le mousseur à lait, et le récipient de lait étant raccordé au mousseur à lait pour permettre au mousseur à lait d'aspirer le lait à partir de ce dernier et faire mousser le lait, dans lequel est configurée une valve de commutation (100) comprenant une première entrée de liquide (114), une deuxième entrée de liquide (115) et une sortie de liquide (116), la première entrée de liquide (114) est utilisée pour alimenter l'eau sous pression, la deuxième entrée de liquide (115) est utilisée pour aspirer le lait du récipient de lait, et la sortie de liquide (116) est raccordée au mousseur à lait ; la première entrée de liquide (114) ou la deuxième entrée de liquide (115) de la valve de commutation est configurée pour être raccordée à la sortie de liquide (116) pour permettre à l'eau sous pression ou au lait de sortir via la sortie de liquide ; la deuxième entrée de liquide (115) est normalement raccordée à la sortie de liquide (116) pour permettre au mousseur à lait d'aspirer le lait du récipient de lait ; et lorsque l'eau sous pression est distribuée à la première entrée de liquide (114), la première entrée de liquide (114) est raccordée à la sortie de liquide (116) pour nettoyer la sortie de liquide (116), une ligne derrière la sortie de liquide (116) et le mousseur à lait,
le système de nettoyage de ligne de lait pour une machine à café étant **caractérisé en ce que** :
la valve de commutation comprend une cavité de valve (110) ; la première entrée de liquide (114), la deuxième entrée de liquide (115) et la sortie de liquide (116) sont agencées dans la cavité de valve, et un ensemble de distributeur à tiroir (120) pouvant se déplacer entre une première position et une deuxième position est agencé dans la cavité de valve (110) ; l'ensemble de distributeur à tiroir (120) est prévu avec un trou de valve (123), un obturateur de valve (125) et un premier ressort (124), et le premier ressort (124) applique une force élastique sur l'obturateur de valve (125) pour permettre à l'obturateur de valve (125) de sceller le trou de valve (123) ; lorsque l'ensemble de distributeur à tiroir (120) est positionné dans la première position sous l'action d'une force élastique d'un deuxième ressort (140), la première entrée de liquide (114) est déconnectée de la sortie de liquide (116), et la deuxième entrée de liquide (115) est raccordée à la sortie de liquide (116) pour permettre la circulation du liquide à partir de la deuxième entrée de liquide (115) ; lorsque l'eau sous pression est alimentée à la première entrée de liquide (114), l'eau sous pression surmonte la force élastique du deuxième ressort (140) pour permettre à l'ensemble de distributeur à tiroir (120) de passer dans la deuxième position pour sceller la deuxième entrée de liquide (115) et surmonte également la force élastique du premier ressort (124) pour pousser l'obturateur de valve (125) à l'opposé du trou de valve (123) pour raccorder la première entrée de liquide (114) à la sortie de liquide (116) via le trou de valve (123) afin de permettre la circulation de l'eau sous pression à partir de la première entrée de liquide.

2. Système de nettoyage de ligne de lait pour une machine à café selon la revendication 1, dans lequel la première entrée de liquide (114) est raccordée à une sortie de la première pompe à eau (202) pour permettre à la première pompe à eau de distribuer de l'eau sous pression froide ou est raccordée à une sortie du dispositif de chauffage (203) pour permettre à la première pompe à eau de distribuer de l'eau sous pression chaude, et une valve de commande (208) pour activer ou désactiver une ligne d'entrée d'eau de la première entrée de liquide (114) est agencée sur la ligne d'entrée d'eau de la première entrée de liquide (114).

3. Système de nettoyage de ligne de lait pour une machine à café selon la revendication 1 ou 2, dans lequel une deuxième pompe à eau (207) est raccordée entre le réservoir d'eau (201) et la première entrée de liquide (114) et utilisée pour distribuer l'eau sous pression à la première entrée de liquide (114).

4. Système de nettoyage de ligne de lait pour une machine à café selon l'une quelconque des revendications 1 à 3, dans lequel une valve de sécurité (209) est configurée pour la première entrée de liquide (114).

5. Système de nettoyage de ligne de lait pour une machine à café selon l'une quelconque des revendications 1 à 4, dans lequel la valve de commutation (100) est agencée dans le récipient de lait (206), la deuxième entrée de liquide (114) étant facultativement ouverte au fond du récipient de lait (206).

6. Système de nettoyage de ligne de lait pour une machine à café selon l'une quelconque des revendications 1 à 4, dans lequel la valve de commutation (100) est située à l'extérieur du récipient de lait (206), et la deuxième entrée de liquide (114) est raccordée à un fond du récipient de lait (206).

7. Système de nettoyage de ligne de lait pour une machine à café selon l'une quelconque des revendications 1 à 6, dans lequel un connecteur de ligne (212) pour au moins l'une de la première entrée de liquide (114), la deuxième entrée de liquide (115) et la sortie de liquide (116), est agencé sur le récipient de lait (206).

8. Système de nettoyage de ligne de lait pour une machine à café selon l'une quelconque des revendications 1 à 7, dans lequel l'ensemble de distributeur à tiroir (120) est configuré dans la cavité de valve (110) comme un piston, la cavité de valve (110) est séparée par l'ensemble de distributeur à tiroir (120) en une première cavité (118) et une deuxième cavité (119), la première entrée de liquide (114) est raccordée à la première cavité (118), et lorsque l'ensemble de distributeur à tiroir est positionné dans la première position, la deuxième entrée de liquide (115) et la sortie de liquide (116) sont raccordées à la deuxième cavité (119).

9. Système de nettoyage de ligne de lait pour une machine à café selon l'une quelconque des revendications 1 à 8, dans lequel la cavité de valve (110) est définie par un corps de valve tubulaire (111) et un premier couvercle d'extrémité (112) et un deuxième couvercle d'extrémité (113) qui sont séparément raccordés aux deux extrémités du corps de valve tubulaire, une bague d'étanchéité (128) est agencée entre l'ensemble de distributeur à tiroir (120) et une paroi interne du corps de valve tubulaire (111) pour empêcher le liquide s'écoulant par la bague d'étanchéité de circuler dans une direction de longueur du corps de valve tubulaire, la première entrée de liquide (114) est formée dans le premier couvercle d'extrémité (112), la deuxième entrée de liquide (115) est formée dans le deuxième couvercle d'extrémité (113), et la sortie de liquide (116) est formée dans une paroi latérale du corps de valve tubulaire (111).

10. Système de nettoyage de ligne de lait pour une machine à café selon l'une quelconque des revendications 1 à 9, dans lequel l'ensemble de distributeur à tiroir (120) comprend un siège de piston tubulaire (121) et un siège de support (122) assemblé à une extrémité du siège de piston tubulaire, le deuxième ressort (140) agit sur le siège de piston tubulaire (121) pour pousser l'ensemble de distributeur à tiroir (120) à se déplacer dans la première position, le trou de valve (123) est formé dans le siège de piston tubulaire (121), et le premier ressort (124) a deux extrémités supportées sur l'obturateur de valve (125) et le siège de support (122) et applique une force élastique vers le trou de valve (123) sur l'obturateur de valve.

11. Système de nettoyage de ligne de lait pour une machine à café selon la revendication 10, dans lequel un trou radial (129) est formé dans le siège de piston tubulaire (121), un interstice de circulation (130) est formé hors du siège de piston tubulaire (121), et lorsque l'ensemble de distributeur à tiroir (120) passe dans la deuxième position, le trou de valve (123) est raccordé à la sortie de liquide (116) via le trou radial (129) et l'interstice de circulation (130).

12. Système de nettoyage de ligne de lait pour une machine à café selon la revendication 10 ou 11, dans lequel un interstice de circulation est formé entre le siège de support (122) et le siège de piston tubulaire (121), et lorsque l'ensemble de distributeur à tiroir (120) passe dans la deuxième position, le trou de valve (123) est raccordé à la sortie de liquide (116) via l'interstice de circulation.

13. Système de nettoyage de ligne de lait pour une machine à café selon l'une quelconque des revendications 1 à 12, dans lequel un bloc d'étanchéité (126) pour sceller la deuxième entrée de liquide (115) est agencé sur l'obturateur de valve (125).

14. Système de nettoyage de ligne de lait pour une machine à café selon la revendication 7 ou 13, dans lequel une bride circulaire (117) est agencée à une extrémité, positionnée dans la cavité de valve, de la deuxième entrée de liquide (115) et utilisée pour sceller la deuxième entrée de liquide lorsque l'ensemble de distributeur à tiroir passe dans la deuxième position.
